# EUROPEAN PATENT SPECIFICATION

(11) **EP 1 758 820 B1**
(45) Date of publication and mention of the grant of the patent: **31.05.2017**
(21) Application number: 05753383.8
(22) Date of filing: 16.06.2005
(51) Int. Cl.: C01F 7/44, C01F 7/46, C01F 7/02, B01J 6/00, C04B 35/10

(54) **PROCESS FOR PRODUCING LOW-SODA ALUMINA AND APPARATUS THEREFOR**
VERFAHREN ZUR HERSTELLUNG VON ALUMINIUM MIT GERINGEM SODAGEHALT UND GERÄT DAFÜR
DISPOSITIF ET PROCEDE DE PRODUCTION D'ALUMINE A FAIBLE TENEUR EN SOUDE

(30) Priority: 16.06.2004 JP 2004177878; 20.12.2004 JP 2004368274
(43) Date of publication of application: 07.03.2007
(73) Proprietor: SHOWA DENKO K.K., Tokyo 105-8518 (JP)
(72) Inventor: KIMURA, Kiichi c/o Showa Denko K.K.;, Yokohama-shi, Kanagawa 2218517 (JP); KOMIYA, Takayoshi c/o Showa Denko K.K.;, Yokohama-shi, Kanagawa 2218517 (JP)
(74) Representative: Strehl Schübel-Hopf & Partner
(86) International application number: PCT/JP2005/011486
(87) International publication number: WO 2005/123590

(56) References cited:
- EP-A- 0 728 700
- WO-A-02/34692
- US-A- 3 262 754
- US-B1- 6 203 773
- DATABASE CA [Online] CHEMICAL ABSTRACTS SERVICE, COLUMBUS, OHIO, US; CHEREPANOVA, M. I. ET AL: "Study of the properties of primary and recirculating dusts in the calcination of alumina" XP002345167 retrieved from STN Database accession no. 95:45405 & IZVESTIYA VYSSHIKH UCHEBNYKH ZAVEDENII, TSVETNAYA METALLURGIYA , (2), 53-5 CODEN: IVUTAK; ISSN: 0021-3438, 1981,

## Description

### TECHNICAL FIELD

The present invention relates to a process for producing low-Na₂O alumina. Specifically, the present invention relates to a process for producing low-Na₂O alumina that can efficiently reduce the Na₂O content of Na₂O alumina and enable continuous production of low-Na₂O alumina. The invention further relates to an apparatus for the production of low-Na₂O alumina.

### BACKGROUND ART

Having high chemical stability, high mechanical strength, and superior physical properties, alumina is used in a wide range of mechanical parts and electric components. Alumina used in industrial applications is mostly produced by calcining aluminum hydroxide that has been obtained by the Bayer process. The aluminum hydroxide obtained by the Bayer process, however, unavoidably contains a Na₂O component, typically in an amount of about 0.15 to 0.80 mass% as Na₂O an a converted alumina basis. When such aluminum oxide is used as a ceramic raw material for electrical insulators of IC boards or spark plugs and the like, the inclusion of Na₂O component is not preferable, since the Na₂O component can cause insulation defects and other problems. It is particularly important to minimize the amount of the Na₂O component when the aluminum oxide is intended for use in parts of semiconductor manufacturing apparatuses since sodium, even in trace amounts, can adversely affect the properties of semiconductor films.

Thus, several techniques have been proposed to remove the Na₂O component in the alumina. In one such technique, a fluoride-based mineralizer and particles containing silicon oxide are added to aluminum hydroxide or alumina particles serving as raw material (See, Japanese Examined Patent Publication No. Sho 63-35573). Another technique involves addition of fine particles of alumina and a fluoride, along with a silica-based compound to serve as a Na₂O-removal agent, to aluminum hydroxide (See, Japanese Patent Laid-Open Publication No. Hei 10-167725 and No. Hei 11-49515). In yet another technique, a fluoride-based mineralizer and a-alumina powder, along with a chloride-based compound to serve as a Na₂O-removal agent, are added to aluminum hydroxide (See, Japanese Patent Laid-Open Publication No. Hei 7 41318). However, each of these proposed techniques involves the use of a silica-based compound, such as silica sand, as a Na₂O-removal agent, so that the resulting alumina tends to be contaminated with silica, leading to degraded sintering properties.

In still another technique, aluminum hydroxide is subjected to a two-step calcining process in the presence
of a mineralizer (See, Japanese Patent Laid-Open Publication No. Hei 6-329412). Although there is no risk that the alumina obtained in this approach is contaminated by silica, the two-step calcining process adds to cost. The present applicant has previously proposed a technique in which waste alumina dust produced
in a calciner during the Na₂O-removal process for aluminum hydroxide is collected and a portion of the collected alumina dust is subjected to a Na₂O-removal process and circulated back into the calciner (See, Pamphlet of WO 2002/034692). However, the alumina collected in this process is not sorted and, thus, the technique still requires further improvement to achieve efficient removal of the Na₂O component.

Low-Na₂O alumina is used in the field of electronic ceramics materials such as IC boards and IC packages. A demand has existed for low-cost low-Na₂O alumina. In recent years, a strong demand has also arisen for further decreasing the Na₂O content of low-Na₂O alumina from the current level of 0.10 mass%.

The present invention is conceived to respond the above-mentioned demand. That is, an object of the present invention is to provide a low-cost low-Na₂O alumina that stable properties, a process for producing thereof efficiently and an apparatus therefor.

### SUMMARY OF THE INVENTION

The present invention, which concerns a production method of low-Na₂O alumina comprising calcining of aluminum hydroxide in the presence of a Na₂O-removal agent, has succeeded in obtaining the desired alumina through the following process: collecting a dust produced in the calciner by a dust collector, with using a particular apparatus, sorting the dust by their size; subjecting at least a portion of a smaller fraction of the sorted dust to a Na₂O-removal process; and putting the processed dust back into the calciner. In addition, the present inventor has discovered that the low-Na₂O alumina obtained by the foregoing process can be washed with an acidic aqueous solution to further decrease its Na₂O content down to 0.01 mass% or below, a suitable range for use in semiconductor production equipment and the like.
(1) A process for producing a low-Na₂O alumina, comprising the steps of:
   calcining an alumina source material in the presence of a Na₂O-removal agent, by which calcined alumina source material dust is produced, in a calciner;
   collecting the dust in a dust collector;
   sorting the dust by particle size;
   subjecting at least a portion of a smaller fraction of the sorted dust to a Na₂O-removal process; and
   returning the thus Na₂O-removal processed dust to the calciner.
(2) The process for producing a low-Na₂O alumina as described in (1), wherein the dust collector sorts the dust into at least two grades by particle size.
(3) The process for producing a low-Na₂O alumina as described in (1), wherein the dust collector comprises at least two dust collectors and sorts the dust into at least two grades by particle size.
(4) The process for producing a low-Na₂O alumina as described in any one of (1) to (3), wherein at least a portion of a smaller particle size fraction of the dust is expelled from the system.
(5) The process for producing a low-Na₂O alumina as described in any one of (1) to (3), wherein at least a first portion of a smaller particle size fraction of the dust is subjected to the Na₂O-removal process and is then returned to the calciner and a second portion of the smaller particle size fraction of the dust is expelled from the system.
(6) The process for producing a low-Na₂O alumina as described in any one of (1) to (3), wherein at least a portion of a larger particle size fraction of the dust is returned to the calciner, while the remainder of the larger particle size fraction is subjected to the Na₂O-removal process and is then returned to the calciner.
(7) The process for producing a low-Na₂O alumina as described in (1), wherein at least a portion of a larger particle size fraction of the dust is returned to the calciner, while the remainder of the larger particle size fraction is subjected to the Na₂O-removal process and is then returned to the calciner.
(8) The process for producing a low-Na₂O alumina as described in (4), wherein at least a portion of a larger particle size fraction of the dust is returned to the calciner, while the remainder of the larger particle size fraction is subjected to the Na₂O-removal process and is then returned to the calciner.
(9) The process for producing a low-Na₂O alumina as described in any one of (1) to (3), wherein the dust is subjected to the Na₂O removal process in the form of a slurry.
(10) The process for producing a low-Na₂O alumina according to any one of (1) to (3),
   wherein the low-Na₂O alumina obtained in the process as described in any one of (1) to (3) is further washed with an acidic aqueous solution.
(11) The process for producing a low-Na₂O alumina according to (4), wherein the low-Na₂O alumina obtained in the process as described in (4) is further washed with an acidic aqueous solution.
(12) The process for producing a low-Na₂O alumina according to (6), wherein the low-Na₂O alumina obtained in the process as described in (6) is further washed with an acidic aqueous solution.
(13) The process for producing a low-Na₂O alumina as described in (10), wherein the low-Na₂O alumina is washed with equal to or more of an acid as Na₂O on a basis of chemical equivalent, which is present in the low-Na₂O alumina prior to the washing with the acidic aqueous solution.
(14) The process for producing a low-Na₂O alumina as described in (10), wherein the low-Na₂O alumina is washed with the acidic aqueous solution under the condition such that 200 to 600g of the low-Na₂O alumina is contained per 1 liter of the acidic aqueous solution while stirred at 50°C or above for 15 minutes or longer, and the resulting low-Na₂O alumina is washed with water, filtered, dried and, if necessary, sieved.
(15) The process for producing a low-Na₂O alumina as described in (13), wherein the low-Na₂O alumina is washed with the acidic aqueous solution under the condition such that 200 to 600 g of the low-Na₂O alumina is contained per 1 liter of the acidic aqueous solution while stirred at 50°C or above for 15 minutes or longer, and the resulting low-Na₂O alumina is washed with water, filtered, dried and, if necessary, sieved.
(16) The process for producing a low-Na₂O alumina as described in (10), wherein after the washing with the acid, the Na₂O impurity is present in the low-Na₂O alumina in an amount of 0.01 mass% or less.
(17) The process as
   described in any one of (1) to (3), wherein the α-crystals present in the obtained low-Na₂O alumina have a mean particle diameter of 0.5 to 10 µm.
(18) The process as described in any one of (1) to (3), wherein the Na₂O content of the obtained low-Na₂O alumina is 0.04 mass% or less.
(19) The process as described in any one of (1) to (3) wherein the obtained low-Na₂O alumina contains the impurities Na₂O, K₂O, SiO₂ and Fe₂O₃ in a total amount of 0.01 mass% to 0.10 mass%.
(20) An apparatus for producing a low-Na₂O alumina, comprising:
   a calciner for calcining an alumina source material in the presence of a Na₂O-removal agent, by which calcined alumina source material dust is produced;
   a unit connected to the calciner for collecting, by particle size, the dust;
   a unit for removing Na₂O from a slurry containing at least a portion of the collected dust; and
   a circuit for returning the Na₂O-removed dust back into the calciner, wherein the unit for collecting the dust by particle size is a dust collector having a sorting function.
(21) The apparatus for producing a low-Na₂O alumina as described in (20), further comprising a branch circuit for returning the collected dust to the calciner.
(22) The apparatus for producing a low-Na₂O alumina as described in (20), wherein the unit for collecting the dust by particle size comprises two or more dust collectors.

The finer the (alumina) dust collected by a dust collector is, the higher the concentration of Na₂O in the (alumina) dust is. In the present invention, the (alumina) dust collected is sorted by particle size, and the amounts of (alumina) dust particles to be expelled from the system, to be returned to a calciner after removal of Na₂O and to be returned directly to the calciner are controlled, to thereby efficiently remove Na₂O in the alumina. For example, where alumina with a particularly low Na₂O content is required or where fine alumina is not desired, a portion of the collected (alumina) dust with a fine particle diameter is expelled from the system in a larger proportion, and where Na₂O removal is not so much required, (alumina) dust with a course particle diameter may be returned directly to the calciner.

### BRIEF DESCRIPTION OF DRAWINGS

Fig. 1 is a schematic block diagram showing a process for producing low-Na₂O alumina according to the present invention.
Fig. 2 is a block diagram showing another arrangement of the dust collector of Fig. 1.

### BEST MODES FOR CARRYING OUT THE INVENTION

The conventional production process of low-Na₂O alumina, which relies on calcining aluminum hydroxide in the presence of a Na₂O-removal agent, generates alumina dust particles. The present invention is based on the fact that such finer alumina dust particles contain higher amounts of the Na₂O component. Specifically, the present invention is characterized in that the collected alumina dust particles are sorted by size and are controlled depending on their destinations: some are expelled from the system while some are subjected to a Na₂O removal process and returned to the calciner. The present invention thus enables efficient collection of low-Na₂O alumina. Here, the dust produced during calcining an alumina source material (such as aluminum hydroxide) primarily comprises alumina particles but the dust may further contain particles of the alumina source material. Such a dust produced during calcining an alumina source material is referred to simply as "dust" or "alumina dust" in this specification and the claims.

The present invention will now be described in detail with reference to the drawings.

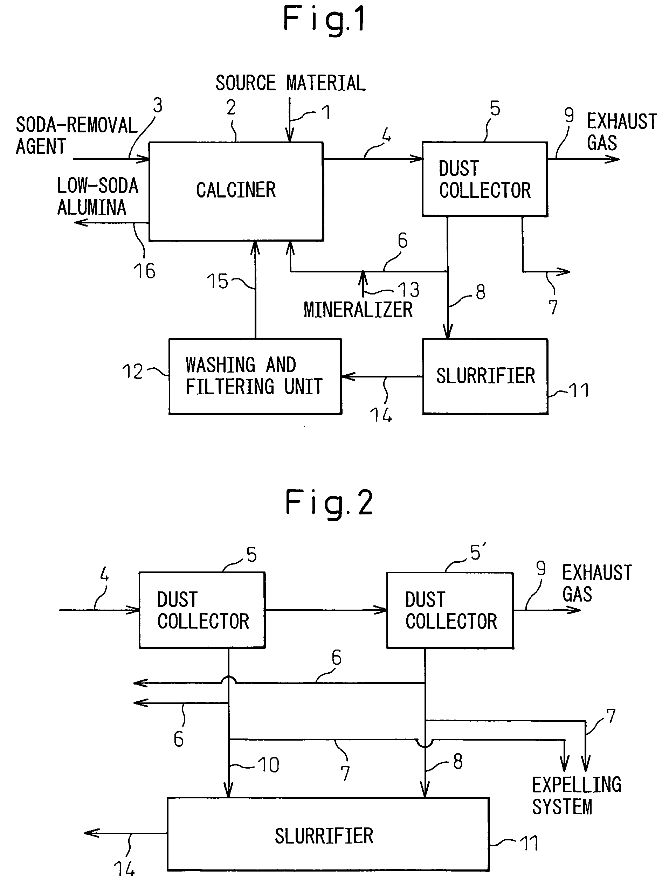

Fig. 1 is a block diagram showing a production process of low-Na₂O alumina of the present invention. Fig. 2 is a block diagram showing part of Fig. 1 including a dust collector.

Referring to Fig. 1, an alumina source material, such as aluminum hydroxide obtained by the Bayer process, is fed to a calciner 2 via line 1. A Na₂O-removal agent is fed to the calciner 2 via line 3. The calciner may be a rotary kiln. The aluminum hydroxide is typically calcined at about 1,000 to 1,4000C. The exhaust gas emitted from the calcined alumina source material passes line 4 and is introduced into a dust collector 5, where the dust in the exhaust gas is collected.

In Fig. 1, the dust collector 5 separates the particles in the dust by size into two fractions: large particles and small particles. The dust collector has a function for separating (alumina dust) particles into two fractions, and may be equipped with a separator such as a centrifuge sorter or a micron separator.

In Fig. 2, two dust collectors 5 and 5' for sorting particles by size are connected to each other. For example, the first dust collector 5 may collect relatively large particles and the second dust collector 5' may collect relatively small particles. By connecting three dust collectors, particles can be sorted into three fractions by size. In Fig. 2, a portion of the dust in dust collectors 5 and 5' may be expelled from the system through line 7, and another portion of the dust in dust collectors 5 and 5 ' may be returned to the calciner through line 6.

In the present invention, the order of the steps of collecting and sorting a dust is not limited and they can be carried out simultaneously.

The dust collector may be any conventional dust collector: it may be a gravity dust collector, such as settling chamber; inertial dust collector, such as louver damper; electrostatic dust collector; centrifugal dust collector, such as multi-cyclone and multi-step cyclone; filtration dust collector, such as bag filter; or washer, such as scrubber.

Two or more dust collectors may be used, so that an inertial collector collects coarse particles, a centrifugal dust collector collects medium particles, and a washer or electrical dust collector collects fine particles.

By using these dust collectors, the particle diameter of alumina dust can be controlled in a desired manner and the alumina dust can be processed to efficiently obtain low-Na₂O alumina specifically, the Na₂O content of the obtainable low-Na₂O alumina can be preferably controlled to 0.04 mass% or below, more preferably 0.03 mass% or below, and the total content of Na₂O, K₂O, SiO₂ and Fe₂O₃ impurities in the obtainable low-Na₂O alumina can be controlled to 0.01 mass% to 0.10 mass%, more preferably 0.06 mass% or below.

The collected alumina dust may be separated by size into two fractions: for example, fine and coarse fractions. In such a case, the fractions are separated preferably at a mean particle diameter of about 25 to 40 µm and, more preferably, at a mean particle diameter of about 25 to 30 µm. Alternatively, the alumina dust may be separated by size into three fractions: fine, medium and coarse fractions. In such a case, the mean particles diameter of the medium fraction is for example from about 20 to 50 µm, more preferably from 25 to 30 µm.

In the method of the present invention, at least a portion of a smaller fraction of the collected alumina dust is introduced into a slurrifier 11 where the Na₂O component of the alumina dust is removed. The alumina dust thus treated is then returned to the calciner.
In the present invention some or all of the fine fraction is subjected to the Na₂O-removal process and returned to the calciner. It is also preferred to expel some or all of the fine fraction from the system via line 7. Since the fine fraction contains a higher concentration of Na₂O component, the Na₂O component of alumina can be efficiently reduced by subjecting the fine fraction to the Na₂O-removal process and returning it to the calciner. This can be achieved preferentially by expelling the fine fraction from the system. Thus, when it is desired to reduce the Na₂O component of the alumina to a particularly low level, more of the fine fraction is subjected to the Na₂O-removal process and returned to the calciner or expelled from the system. The (alumina) dust to be subjected to the Na₂O-removal process and returned to the calciner is introduced into the slurrifier 11 via line 8. The coarse fraction may be entirely sent back to the calciner 2 directly via line 6, or a portion of the coarse fraction may be sent to the slurrifier 11 via line 10 while the remainder is returned to the calciner 2. A portion of the coarse fraction may be expelled from the system. When it is desired to reduce the Na₂O component of the alumina to a still low level, more of the coarse fraction is returned to the slurrifier 11. In cases where the collected alumina dust is separated by size into three fractions, the medium fraction may be either expelled from the system, sent to the slurrifier, or returned to the calciner, depending on the intended Na₂O content of the alumina. The exhaust gas from which alumina dust has been removed is expelled from the dust collector via line 9. A mineralizer is preferably added to the alumina dust when the (alumina) dust is returned to the calciner.

After processed in the slurrifier to reduce the Na₂O component, the alumina dust is sent via line 14 to a washing and filtering apparatus 12, where it is filtrated and washed. The washed (alumina) dust is then sent to the calciner via line 15.

The low-Na₂O alumina obtained in the above-described manner is taken out from the calciner via line 16.

Each line has a cock (valve) that closes or opens in a required manner. For example, valves on lines 6 and 10 can be regulated to control the proportion of the amount of the alumina dust sent to the calciner 2 and to the slurrifier 11. A valve at the branch point of line 7 from line 8 can also be regulated to control the amount of the dust expelled from the system and the amount of the dust sent to the slurrifier. The amounts of the additives, including Na₂O-removal agent and mineralizer, are properly determined. While the mineralizer is preferably circulated back to the calciner along with a portion of the collected dust, it may be directly fed to the calciner. In the present invention, the means to regulate the amount of the dust supply is not limited to the aforementioned valves and may be any other suitable means.

In the present invention, the concentration of the Na₂O component or the mineralizer present in the alumina dust which is sorted/collected by one of the multiple dust collectors and has a first size differs from the concentration of the Na₂O component or the mineralizer present in the alumina dust which is sorted/collected by another of the multiple dust collectors and has a second size. A finer fraction tends to contain a higher concentration of the Na₂O component or the mineralizer. Thus, in the multiple dust collectors intended to collect fractions of different sizes of dust particles, ones that collect the finer fractions preferentially discharge the collected particles into a line for expelling from the system or a line for feeding to the slurrifier, while the other dust collectors that collect the coarser fractions preferentially discharges into a line for returning the calciner. In this manner, the Na₂O component of the alumina dust can be effectively decreased by processing relatively small amounts of the aluminum dust.

As set forth, low-Na₂O alumina can be produced easily and continuously by continuously supplying the source material of the process and returning the collected aluminum dust according to the present invention.

A preferred alumina source material used in the method of the present invention is aluminum hydroxide obtained by the Bayer process. While the alumina source material to serve as the starting material may comprise particles of any shape, gibbsite-type aluminum hydroxides obtained by the Bayer process are economically preferred.

When the alumina source material in the method of the present invention contains the Na₂O component, Na₂O, in an amount of 0.04 mass% or more in terms of the amount of alumina, the amount of the Na₂O-removal agent to be added is preferably 1 to 15 times the theoretical amount (chemical equivalent) relative to the Na₂O content in the alumina source material. The alumina source material with the specified amount of the Na₂O-removal agent added is then calcined. The Na₂O-removal agent for use in the present invention may be any agent that reacts with the Na₂O component upon heating and thereby removes the Na₂O component. Examples include chloride-based Na₂O-removal agents, such as hydrochloric acid, ammonium chloride, magnesium chloride and other chlorine-containing compounds. These agents may be used either individually or as a mixture of two or more agents. In the present invention, it is preferable to add the Na₂O-removal agent in a counter-current to the flow of the alumina source material. In this manner, the alumina source material is exposed to the gasified sodium-removal agent, reacting with the agent.

In the dust in the exhaust gas generated by the calciner, the Na₂O content relative to the alumina is concentrated to 0.3 to 1.5 mass% but it is possible to remove 50 to 80 mass% of the Na₂O content by slurrying, washing and filtering. The pH of the slurry is preferably controlled to a value between 7 and 11, more preferably between 7 and 9, in the step of washing and filtering step. If the pH of the slurry falls outside this range, the efficiency of the Na₂O removal may be decreased and problems may arise in terms of instrumentation of the process. By carrying out the slurrying step and the washing/filtration step at the pH range of 7 to 11, the concentrated components that act as mineralizer, such as fluorine, can be removed.

The dust sorted/collected by the dust collector 5 is divided into a portion (a), which is made into a slurry and washed/filtrated to form a filtration cake, and a portion (b), which is returned (circulated) to the calciner as-collected state. By controlling the amount of the portion (a) relative to the amount of the portion (b), i.e., by varying the amount of the portion (a) below or equal to the total amount of the collected dust, the particle diameter of α-crystals can be varied even when the calcination temperature and other calcining conditions are the same. By increasing the amount of the portion (a) that is subjected to the washing/filtration step, the Na₂O component can be reduced, as can the mineralizer component.

In addition, by expelling portion of the dust with highly concentrated Na₂O component or mineralizer component from the system, for example, via line 7 shown in Fig. 1, the Na₂O content of the resulting low-Na₂O alumina can be further reduced and the deviation of the particle diameter of α-crystals can be reduced, even under the same calcining conditions. This ensures stable calcination. The expelling of the concentrated Na₂O component from the system enables further reduction of the Na₂O content of the alumina, while the expelling of the mineralizer component from the system minimizes the effect of mineralization on the calcining process.

It is preferable that the amount of the dust which is collected and circulated to the calciner is controlled so that the content of fluorine-based compounds (in the alumina) falls in the range of 200 to 1,800 ppm (in terms of F) by controlling the proportion of the dust subjected to the slurrying step and washing/filtration step, the amount of dust expelled from the system or the amount of the mineralizer, such as fluorine-based compounds. If the amount of the mineralizer is too small, then the resulting α-crystal particles of alumina may not be sufficiently large. If the amount of the mineralizer is too large, then the resulting crystals may become plate crystals.

The fluorine compound used as the mineralizer can be selected from at least one of aluminum fluoride, hydrogen fluoride, ammonium fluoride, sodium fluoride, magnesium fluoride, and calcium fluoride. The α-crystals of the resulting low-Na₂O alumina product preferably has a mean particle diameter in the range of 0.5 to 10 µm, more preferably 0.5 to 2 µm. The α-crystals having diameters within this range can be obtained by properly selecting the fluorine-based compound content, calcining temperature and calcining time.

When it is desired to further decrease the Na₂O content of the low-Na₂O alumina obtained in the above-described process, the obtained low-Na₂O alumina is preferably washed with an acidic aqueous solution. The acidic aqueous solution for use in the washing process is, for example, hydrochloric acid, nitric acid, sulfuric acid or citric acid. The washing process may be carried out by preparing a slurry with a concentration of 200 to 600 g/l and stirring the slurry at a temperature of 50°C or above for 15 minutes or longer, followed by filtration and washing with water. While the pH of the acidic aqueous solution may be any acidic value, it is preferably in the range of 0 to 5. In this manner, sodium is removed from the surface of the alumina and the amount thereof is reduced. The Na₂O content in terms of Na₂O in the low-Na₂O alumina can be reduced to 0.01 mass% or less. Following this process, the alumina is dried or sieved as desired.

The low-Na₂O alumina produced by the method of the present invention is a suitable material for use in ceramic products used in electronic devices, such as IC boards and IC packages, spark plugs, and parts of semiconductor-manufacturing apparatuses.

### EXAMPLES

The present invention will now be described with reference to examples, which are not intended to limit the scope of the invention in any way. Measurements of quantities used in each example were taken as follows:
(1) Composition analysis
   Na₂O: determined by an ICP emission spectrophotometer.
(2) pH measurement
   30g powder in 70 ml purified water was warmed in a warm water for 2 hours and was then allowed to cool. The pH of the cooled solution was determined.
(3) Measurement of particle diameter distribution
   Determined by Microtrac HRA X-100 (manufactured by Nikkiso).
(4) Measurement of α-crystal particle diameter
   Determined by Microtrac HRA X-100 (Nikkiso).

### Example 1

Aluminum hydroxide obtained by the Bayer process and containing 0.20 mass% Na₂O component, Na₂O (relative to the alumina) was fed to a calciner. The material contained about 10 mass% of water. 35 mass% of hydrochloric acid was introduced in a counter-current flow to the alumina hydroxide. The amount of hydrochloric acid added was approximately 7 times its theoretical amount (theoretical amount: 2 mol HCl for 1 mol of Na₂O) of the Na₂O component of the aluminum hydroxide. Calcination was carried out at 1,100°C in a rotary kiln. Using a dust collector, which consisted of a centrifugal dust collector and an electrical dust collector, the dust produced during calcining the aluminum hydroxide was collected and separated by size into two fractions. The fraction of larger particles accounted for 60 mass% of the total (alumina) dust and the mean particle diameter thereof was approximately 60 µm. The fraction of smaller particles accounted for 40 mass% of the total (alumina) dust and the mean particle diameter thereof was approximately 20 µm. 80 mass% of the smaller fraction was prepared into a slurry at pH8.5, was filtrated/washed, and was then returned to the calciner, where it was recalcined at 1,100°C. No (alumia) dust was expelled from the system. 100 mass% of the coarse particles and 20 mass% of the fine particles were directly returned to the calciner.

The resulting low-Na₂O alumina contained 0.030 mass% of Na₂O, 0.004 mass% of K₂O, 0.016 mass% of Fe₂O₃, and 0.010 mass% of SiO₂. The mean diameter of the α-crystal was 1.1 µm.

### Example 2

As in Example 1, aluminum hydroxide obtained by the Bayer process and containing 0.20 mass% Na₂O component, Na₂O (relative to alumina) was fed to a calciner. The material contained about 10 mass% of water. 35 mass% of hydrochloric acid was introduced in a counter-current flow to the alumina hydroxide. The amount of hydrochloric acid added was approximately 7 times its theoretical amount of the Na₂O component of the aluminum hydroxide. Calcination was carried out in the same manner as in Example 1. Using a dust collector, which consisted of a centrifugal dust collector and an electrical dust collector connected to each other, the dust produced during calcining the aluminum hydroxide was collected and separated by size into two fractions: the fraction of alumina dust particles with a mean particle size of approximately 60 µm accounted for 60 mass% of the total (alumia) dust; and the fraction of alumina dust particles with a mean particle size of approximately 20 µm accounted for 40 mass% of the total (alumia) dust.

Approximately 50 mass% of the coarse fraction was prepared into a slurry at pH8.5, was filtrated/washed, and was then returned to the calciner. 50 mass% of the coarse particles were directly returned to the calciner (no mineralizer added), 25 mass% of the fine particles were expelled from the system, and 75 mass% of the fine particles were directly returned to the calciner. The alumina was then recalcined at 1,100°C to give a low-Na₂O alumina.

The resulting low-Na₂O alumina contained 0.009 mass% of Na₂O, 0.004 mass% of K₂O, 0.019 mass% of Fe₂O₃, and 0.010 mass% of SiO₂. The mean diameter of the α-crystal was 1.2 µm.

### Example 3

A sulfuric acid aqueous solution was prepared by adding 2g concentrated sulfuric acid to 250 ml water. To the prepared sulfuric acid aqueous solution, 100g of the α-alumina obtained in Example 1 was added to form a slurry (slurry concentration = 400 g/l). The slurry was stirred at 80°C for 1 hour, was washed with three times as much (by volume) of water, and was subsequently dried at 200°C for 12 hours.

The resulting alumina contained 0.005 mass% of Na₂O, 0.002 mass% of K₂O, 0.015 mass% of Fe₂O₃, and 0.007 mass% of SiO₂.

### Example 4

A sulfuric acid aqueous solution was prepared by adding 2g concentrated sulfuric acid to 250 ml water. To the prepared sulfuric acid aqueous solution, 100g of the α-alumina obtained in Example 2 was added to form a slurry (slurry concentration = 400 g/l). The slurry was stirred at 80°C for 1 hour, was washed with three times as much (by volume) of water, and was subsequently dried at 200°C for 12 hours.

The resulting alumina contained 0.004 mass% of Na₂O, 0.002 mass% of K₂O, 0.017 mass% of Fe₂O₃, and 0.006 mass% of SiO₂.

### Comparative Example 1

Calcination was carried out in the same manner as in Example 1. The dust produced during calcining the aluminum hydroxide was collected by a dust collector as a total dust. Approximately 30 mass% of the collected total dust was prepared into a slurry at pH8.5, was filtrated/washed, and was then returned to the calciner, while approximately 70 mass% of the collected total dust being directly returned to the calciner, where it was recalcined at 1,100°C.

The resulting alumina contained 0.054 mass% of Na₂O, 0.004 mass% of K₂O, 0.017 mass% of Fe₂O₃, and 0.009 mass% of SiO₂.

### Comparative Example 2

A sulfuric acid aqueous solution was prepared by adding 2g concentrated sulfuric acid to 250 ml water. To the prepared sulfuric acid aqueous solution, 100g of the α-alumina obtained in Comparative Example 1 was added to prepare a slurry (slurry concentration = 400 g/l). The slurry was. stirred at 80°C for 1 hour, was washed with three times as much (by volume) of water, and was subsequently dried at 200°C for 12 hours.

The resulting alumina contained 0.012 mass% of Na₂O, 0.003 mass% of K₂O, 0.015 mass% of Fe₂O₃, and 0.006 mass% of SiO₂.

### INDUSTRIAL APPLICABILITY

The present invention enables efficient, continuous production of inexpensive low-Na₂O alumina. The low-Na₂O alumina of the present invention can be produced in stable yields and has superior sintering properties without posing the problem of silica contamination. The low-Na₂O alumina produced by the method of the present invention is suitable for use in wide applications, including ceramics used in IC boards, IC circuits, spark plugs, and parts of semiconductor-manufacturing apparatuses, and has a high industrial value.

## Claims

1. A process for producing a low-Na₂O alumina, comprising the steps of:
calcining an alumina source material in the presence of a Na₂O-removal agent, by which calcined alumina source material dust is produced, in a calciner;
collecting the dust in a dust collector;
sorting the dust by particle size;
subjecting at least a portion of a smaller fraction of the sorted dust to a Na₂O-removal process; and
returning the thus Na₂O-removal processed dust to the calciner.

2. The process for producing a low-Na₂O alumina according to claim 1, wherein the dust collector sorts the dust into at least two grades by particle size.

3. The process for producing a low-Na₂O alumina according to claim 1, wherein the dust collector comprises at least two dust collectors and sorts the dust into at least two grades by particle size.

4. The process for producing a low-Na₂O alumina according to any one of claims 1 to 3, wherein at least a portion of a smaller particle size fraction of the dust is expelled from the system.

5. The process for producing a low-Na₂O alumina according to any one of claims 1 to 3, wherein at least a first portion of a smaller particle size fraction of the dust is subjected to the Na₂O-removal process and is then returned to the calciner and a second portion of the smaller particle size fraction of the dust is expelled from the system.

6. The process for producing a low-Na₂O alumina according to any one of claims 1 to 3, wherein at least a portion of a larger particle size fraction of the dust is returned to the calciner, while the remainder of the larger particle size fraction is subjected to the Na₂O-removal process and is then returned to the calciner.

7. The process for producing a low-Na₂O alumina according to claim 1, wherein at least a portion of a larger particle size fraction of the dust is returned to the calciner, while the remainder of the larger particle size fraction is subjected to the Na₂O-removal process and is then returned to the calciner.

8. The process for producing a low-Na₂O alumina according to claim 4, wherein at least a portion of a larger particle size fraction of the dust is returned to the calciner, while the remainder of the larger particle size fraction is subjected to the Na₂O-removal process and is then returned to the calciner.

9. The process for producing a low-Na₂O alumina according to any one of claims 1 to 3, wherein the dust is subjected to the Na₂O removal process in the form of a slurry.

10. The process for producing a low-Na₂O alumina according to any one of claims 1 to 3, wherein the low-Na₂O alumina obtained in the process according to any one of claims 1 to 3 is further washed with an acidic aqueous solution.

11. The process for producing a low-Na₂O alumina according to claim 4, wherein the low-Na₂O alumina obtained in the process according to claim 4 is further washed with an acidic aqueous solution.

12. The process for producing a low-Na₂O alumina according to claim 6, wherein the low-Na₂O alumina obtained in the process according to claim 6 is further washed with an acidic aqueous solution.

13. The process for producing a low-Na₂O alumina according to claim 10, wherein the low-Na₂O alumina is washed with equal to or more of an acid as Na₂O on a basis of chemical equivalent, which is present in the low-Na₂O alumina prior to the washing with the acidic aqueous solution.

14. The process for producing a low-Na₂O alumina according to claim 10, wherein the low-Na₂O alumina is washed with the acidic aqueous solution under the condition such that 200 to 600g of the low-Na₂O alumina is contained per 1 liter of the acidic aqueous solution while stirred at 50°C or above for 15 minutes or longer, and the resulting low-Na₂O alumina is washed with water, filtered, dried and, if necessary, sieved.

15. The process for producing a low-Na₂O alumina according to claim 13, wherein the low-Na₂O alumina is washed with the acidic aqueous solution under the condition such that 200 to 600g of the low-Na₂O alumina is contained per 1 liter of the acidic aqueous solution while stirred at 50°C or above for 15 minutes or longer, and the resulting low-Na₂O alumina is washed with water, filtered, dried and, if necessary, sieved.

16. The process for producing a low-Na₂O alumina according to claim 10, wherein after the washing with the acid, the Na₂O impurity is present in the low-Na₂O alumina in an amount of 0.01 mass% or less.

17. The process according to any one of claims 1 to 3, wherein the α-crystals present in the obtained low-Na₂O alumina have a mean particle diameter of 0.5 to 10 µm.

18. The process according to any one of claims 1 to 3, wherein the Na₂O content of the obtained low-Na₂O alumina is 0.04 mass% or less.

19. The process according to any one of claims 1 to 3, wherein the obtained low-Na₂O alumina contains the impurities Na₂O, K₂O, SiO₂ and Fe₂O₃ in a total amount of 0.01 mass% to 0.10 mass%.

20. An apparatus for producing a low-Na₂O alumina, comprising:
a calciner for calcining an alumina source material in the presence of a Na₂O-removal agent, by which calcined alumina source material dust is produced;
a unit connected to the calciner for collecting, by particle size, the dust;
a unit for removing Na₂O from a slurry containing at least a portion of the collected dust; and
a circuit for returning the Na₂O-removed dust back into the calciner, wherein the unit for collecting the dust by particle size is a dust collector having a sorting function.

21. The apparatus for producing a low-Na₂O alumina according to claim 20, further comprising a branch circuit for returning the collected dust to the calciner.

22. The apparatus for producing a low-Na₂O alumina according to claim 20, wherein the unit for collecting the dust by particle size comprises two or more dust collectors.

## Patentansprüche

1. Verfahren zum Herstellen von Nieder-Na₂O-Aluminiumoxid, welches die folgenden Stufen umfasst:
das Kalzinieren eines Aluminiumoxidausgangsmaterials in Anwesenheit eines Na₂O-Entfernungsmittels in einer Kalziniervorrichtung, wodurch kalzinierter Aluminiumoxidausgangsmaterialstaub hergestellt wird,;
das Gewinnen des Staubs in einem Staubkollektor;
das Sortieren des Staubs nach Teilchengröße;
das Durchführen eines Na₂O-Entfernungsverfahrens mit mindestens einem Teil einer kleineren Fraktion des sortierten Staubes; und
das Zurückführen des so verarbeiteten Na₂O-Entfernungsstaubes in eine Kalziniervorrichtung.

2. Verfahren zum Herstellen eines niederen Na₂O-Aluminiumoxids nach Anspruch 1, wobei der Staubkollektor den Staub in mindestens zwei Grade nach Teilchengröße sortiert.

3. Verfahren zum Herstellen eines Nieder-Na₂O-Aluminiumoxids nach Anspruch 1, wobei der Staubkollektor mindestens zwei Staubkollektoren aufweist und den Staub in mindestens zwei Grade nach Teilchengröße sortiert.

4. Verfahren zum Herstellen eines Nieder-Na₂O-Aluminiumoxids nach einem der Ansprüche 1 bis 3, wobei mindestens ein Teil der Fraktion der kleineren Teilchengrößen des Staubes aus dem System ausgestoßen wird.

5. Verfahren zum Herstellen eines Nieder-Na₂O-Aluminiumoxids nach einem der Ansprüche 1 bis 3, wobei mindestens ein erster Teil der Fraktion kleinerer Teilchengrößen des Staubes einem Na₂O-Entfernungsverfahren unterworfen wird und dann in die Kalziniervorrichtung zurückgeführt wird und ein zweiter Teil der Fraktion kleinerer Teilchengrößen des Staubes aus dem System ausgestoßen wird.

6. Verfahren zum Herstellen eines Nieder-Na₂O-Aluminiumoxids nach einem der Ansprüche 1 bis 3, wobei mindestens ein Teil einer Fraktion größerer Teilchengrößen des Staubes in die Kalziniervorrichtung zurückgeführt wird, während der Rest der Fraktion größerer Teilchengrößen einem Na₂O-Entfernungsverfahren unterworfen wird und dann in die Kalziniervorrichtung zurückgeführt wird.

7. Verfahren zum Herstellen eines Nieder-Na₂O-Aluminiumoxids nach Anspruch 1, wobei mindestens ein Teil der Fraktion größerer Teilchengrößen des Staubes in die Kalziniervorrichtung zurückgeführt wird, während der Rest der Fraktion größerer Teilchengrößen einem Na₂O-Entfernungsverfahren unterworfen und dann in die Kalziniervorrichtung zurückgeführt wird.

8. Verfahren zum Herstellen eines Nieder-Na₂O-Aluminiumoxids nach Anspruch 4, wobei mindestens ein Teil einer Fraktion größerer Teilchengrößen des Staubes in die Kalziniervorrichtung zurückgeführt wird, während der Rest der Fraktion größerer Teilchengrößen einem Na₂O-Entfernungsverfahren unterworfen und dann in die Kalziniervorrichtung zurückgeführt wird.

9. Verfahren zum Herstellen eines Nieder-Na₂O-Aluminiumoxids nach einem der Ansprüche 1 bis 3, wobei der Staub einem Na₂O-Entfernungsverfahren in der Form einer Aufschlämmung unterworfen wird.

10. Verfahren zum Herstellen eines Nieder-Na₂O-Aluminiumoxids nach einem der Ansprüche 1 bis 3, wobei das in dem Verfahren nach einem der Ansprüche 1 bis 3 erhaltene Nieder-Na₂O-Aluminiumoxid außerdem mit einer sauren wässrigen Lösung gewaschen wird.

11. Verfahren zum Herstellen eines Nieder-Na₂O-Aluminiumoxids nach Anspruch 4, wobei das in dem Verfahren nach Anspruch 4 erhaltene Nieder-Na₂O-Aluminiumoxid außerdem mit einer sauren wässrigen Lösung gewaschen wird.

12. Verfahren zum Herstellen eines Nieder-Na₂O-Aluminiumoxids nach Anspruch 6, wobei das in dem Verfahren nach Anspruch 6 erhaltene Nieder-Na₂O-Aluminiumoxid außerdem mit einer sauren wässrigen Lösung gewaschen wird.

13. Verfahren zum Herstellen eines Nieder-Na₂O-Aluminiumoxids nach Anspruch 10, wobei das Nieder-Na₂O-Aluminiumoxid mit der gleichen oder einer größeren Menge einer Säure im Vergleich zu Na₂O auf Grundlage der chemischen Äquivalente gewaschen wird, die in dem Nieder-Na₂O-Aluminiumoxid vor dem Waschen mit der sauren wässrigen Lösung enthalten sind.

14. Verfahren zum Herstellen eines Nieder-Na₂O-Aluminiumoxids nach Anspruch 10, wobei das Nieder-Na₂O-Aluminiumoxid mit der sauren wässrigen Lösung unter der Bedingung gewaschen wird, das 200 bis 600 g des Nieder-Na₂O-Aluminiumoxids pro 1 Liter der sauren wässrigen Lösung enthalten sind, während 15 Minuten oder länger bei 50°C oder höher gerührt wird, und wobei das erhaltene Nieder-Na₂O-Aluminiumoxid mit Wasser gewaschen, filtriert, getrocknet und dann bei Bedarf gesiebt wird.

15. Verfahren zum Herstellen eines Nieder-Na₂O-Aluminiumoxids nach Anspruch 13, wobei das Nieder-Na₂O-Aluminiumoxid mit der sauren wässrigen Lösung unter der Bedingung gewaschen wird, das 200 bis 600 g des Nieder-Na₂O-Aluminiumoxids pro 1 Liter der sauren wässrigen Lösung enthalten sind, während 15 Minuten oder länger bei 50°C oder höher gerührt wird, und wobei das erhaltene Nieder-Na₂O-Aluminiumoxid mit Wasser gewaschen, filtriert, getrocknet und bei Bedarf gesiebt wird.

16. Verfahren zum Herstellen eines Nieder-Na₂O-Aluminiumoxids nach Anspruch 10, wobei nach dem Waschen mit der Säure die Na₂O-Verunreinigung in dem Nieder-Na₂O-Aluminiumoxid in einer Menge von 0,01 Massen-% oder weniger enthalten ist.

17. Verfahren nach einem der Ansprüche 1 bis 3, wobei die in dem erhaltenen Nieder-Na₂O-Aluminiumoxid vorhandenen α-Kristalle einen mittleren Teilchendurchmesser von 0,5 bis 10 µm aufweisen.

18. Verfahen nach einem der Ansprüche 1 bis 3, wobei der Na₂O-Gehalt des erhaltenen Nieder-Na₂O-Aluminiumoxids 0,04 Massen-% oder weniger ist.

19. Verfahren nach einem der Ansprüche 1 bis 3, wobei das erhaltenen Nieder-Na₂O-Aluminiumoxid die Verunreinigungen Na₂O, K₂O, SiO₂ und Fe₂O₃ in einer Gesamtmenge von 0,01 Massen-% bis 0,10 Massen-% enthält.

20. Apparat zum Herstellen eines Nieder-Na₂O-Aluminiumoxids, welcher umfasst:
eine Kalziniervorrichtung zum Kalzinieren eines Aluminiumoxidausgangsmaterials in Anwesenheit eines Na₂O-Entfernungsmittels, wodurch kalzinierter Aluminiumoxid-Ausgangsmterialstaub erhalten wird;
eine Einheit, die mit der Kalziniervorrichtung verbunden ist, zum Gewinnen des Staubes nach der Teilchengröße;
eine Einheit zum Entfernen von Na₂O aus einer Aufschlämmung, die mindestens einen Teil des gewonnenen Staubes enthält; und
einen Kreislauf zum Zurückführen des Na₂O-Entfernungsstaubes in die Kalziniervorrichtung, wobei die Einheit zum Gewinnen des Staubes nach Teilchengröße ein Staubkollektor mit Sortierungsfunktion ist.

21. Apparat zum Herstellen eines Nieder-Na₂O-Aluminiumoxids nach Anspruch 20, der außerdem einen verzweigten Kreislauf zum Zurückführen des gewonnen Staubes in die Kalziniervorrichtung umfasst.

22. Apparat zum Herstellen eines Nieder-Na₂O-Aluminiumoxids nach Anspruch 20, wobei die Einheit zum Gewinnen des Staubes nach der Teilchengröße zwei oder mehr Staubkollektoren umfasst.

## Revendications

1. Procédé de production d'alumine à faible teneur en Na₂O, comprenant les étapes suivantes:
calciner un matériau source d'alumine en présence d'un agent d'élimination de Na₂O, produisant ainsi une poussière de matériau source d'alumine calciné dans un four de calcination;
récolter la poussière dans un collecteur de poussière;
trier la poussière selon la taille des particules;
soumettre au moins une portion d'une plus petite fraction de la poussière triée à un processus d'élimination de Na₂O; et
renvoyer la poussière ainsi traitée par élimination de Na₂O dans le four de calcination.

2. Procédé de production d'alumine à faible teneur en Na₂O selon la revendication 1, dans lequel le collecteur de poussière trie la poussière en au moins deux classes selon la taille des particules.

3. Procédé de production d'alumine à faible teneur en Na₂O selon la revendication 1, dans lequel le collecteur de poussière comprend au moins deux collecteurs de poussière et trie la poussière en au moins deux classes selon la taille des particules.

4. Procédé de production d'alumine à faible teneur en Na₂O selon l'une quelconque des revendications 1 à 3, dans lequel au moins une portion d'une fraction de plus petite taille de particules de la poussière est expulsée hors du système.

5. Procédé de production d'alumine à faible teneur en Na₂O selon l'une quelconque des revendications 1 à 3, dans lequel au moins une première portion d'une fraction de plus petite taille de particules de la poussière est soumise au processus d'élimination de Na₂O et est ensuite renvoyée au four de calcination et une deuxième portion de la fraction de plus petite taille de particules de la poussière est expulsée hors du système.

6. Procédé de production d'alumine à faible teneur en Na₂O selon l'une quelconque des revendications 1 à 3, dans lequel au moins une portion d'une fraction de plus grande taille de particules de la poussière est renvoyée au four de calcination, tandis que le reste de la fraction de plus grande taille de particules est soumis au processus d'élimination de Na₂O et est ensuite renvoyé au four de calcination.

7. Procédé de production d'alumine à faible teneur en Na₂O selon la revendication 1, dans lequel au moins une portion d'une fraction de plus grande taille de particules de la poussière est renvoyée au four de calcination, tandis que le reste de la fraction de plus grande taille de particules est soumis au processus d'élimination de Na₂O et est ensuite renvoyé au four de calcination.

8. Procédé de production d'alumine à faible teneur en Na₂O selon la revendication 4, dans lequel au moins une portion d'une fraction de plus grande taille de particules de la poussière est renvoyée au four de calcination, tandis que le reste de la fraction de plus grande taille de particules est soumis au processus d'élimination de Na₂O et est ensuite renvoyé au four de calcination.

9. Procédé de production d'alumine à faible teneur en Na₂O selon l'une quelconque des revendications 1 à 3, dans lequel la poussière est soumise au processus d'élimination de Na₂O sous la forme d'une boue.

10. Procédé de production d'alumine à faible teneur en Na₂O selon l'une quelconque des revendications 1 à 3, dans lequel l'alumine à faible teneur en Na₂O obtenue dans le procédé selon l'une quelconque des revendications 1 à 3 est en outre lavée avec une solution aqueuse acide.

11. Procédé de production d'alumine à faible teneur en Na₂O selon la revendication 4, dans lequel l'alumine à faible teneur en Na₂O obtenue dans le procédé selon la revendication 4 est en outre lavée avec une solution aqueuse acide.

12. Procédé de production d'alumine à faible teneur en Na₂O selon la revendication 6, dans lequel l'alumine à faible teneur en Na₂O obtenue dans le procédé selon la revendication 6 est en outre lavée avec une solution aqueuse acide.

13. Procédé de production d'alumine à faible teneur en Na₂O selon la revendication 10, dans lequel l'alumine à faible teneur en Na₂O est lavée avec une quantité d'un acide égale ou supérieure au Na₂O sur une base d'équivalence chimique, qui est présent dans l'alumine à faible teneur en Na₂O avant le lavage avec la solution aqueuse acide.

14. Procédé de production d'alumine à faible teneur en Na₂O selon la revendication 10, dans lequel l'alumine à faible teneur en Na₂O est lavée avec la solution aqueuse acide sous la condition que 200 à 600 g de l'alumine à faible teneur en Na₂O soient contenus par litre de la solution aqueuse acide tout en étant agitée à 50°C ou au-delà pendant 15 minutes ou plus longtemps, et l'alumine à faible teneur de Na₂O résultante est lavée à l'eau, filtrée, séchée et, si nécessaire, criblée.

15. Procédé de production d'alumine à faible teneur en Na₂O selon la revendication 13, dans lequel l'alumine à faible teneur en Na₂O est lavée avec la solution aqueuse acide sous la condition que 200 à 600 g de l'alumine à faible teneur en Na₂O soient contenus par litre de la solution aqueuse acide tout en étant agitée à 50°C ou au-delà pendant 15 minutes ou plus longtemps, et l'alumine à faible teneur de Na₂O résultante est lavée à l'eau, filtrée, séchée et, si nécessaire, criblée.

16. Procédé de production d'alumine à faible teneur en Na₂O selon la revendication 10, dans lequel, après le lavage avec l'acide, l'impureté Na₂O est présente dans l'alumine à faible teneur en Na₂O en une quantité de 0,01 % en masse ou moins.

17. Procédé selon l'une quelconque des revendications 1 à 3, dans lequel les cristaux α présents dans l'alumine à faible teneur en Na₂O obtenue ont un diamètre de particule moyen de 0,5 à 10 µm.

18. Procédé selon l'une quelconque des revendications 1 à 3, dans lequel la teneur en Na₂O de l'alumine à faible teneur en Na₂O obtenue est de 0,04 % en masse ou moins.

19. Procédé selon l'une quelconque des revendications 1 à 3, dans lequel l'alumine à faible teneur en Na₂O obtenue contient les impuretés Na₂O, K₂O, SiO₂ et Fe₂O₃ en une quantité totale de 0,01 % en masse à 0,10 % en masse.

20. Dispositif de production d'alumine à faible teneur en Na₂O, comprenant:
un four de calcination pour calciner un matériau source d'alumine en présence d'un agent d'élimination de Na₂O, produisant de ce fait une poussière de matériau source d'alumine calciné;
une unité connectée au four de calcination pour récolter la poussière, par taille de particules;
une unité pour éliminer le Na₂O à partir d'une boue contenant au moins une portion de la poussière récoltée; et
un circuit pour renvoyer la poussière débarrassée de Na₂O au four de calcination, dans lequel l'unité pour récolter la poussière par taille de particules est un collecteur de poussière présentant une fonction de tri.

21. Dispositif de production d'alumine à faible teneur en Na₂O selon la revendication 20, comprenant en outre un circuit ramifié pour renvoyer au four de calcination la poussière récoltée.

22. Dispositif de production d'alumine à faible teneur en Na₂O selon la revendication 20, dans lequel l'unité pour récolter la poussière par taille de particules comprend deux ou plusieurs collecteurs de poussière.
